# EUROPEAN PATENT SPECIFICATION

(11) **EP 1 195 098 B1**
(45) Date of publication and mention of the grant of the patent: **28.11.2007**
(21) Application number: 01203573.9
(22) Date of filing: 20.09.2001
(51) Int. Cl.: A23L 1/24, A23L 1/39

(54) **Dressing or marinade**
Dressing oder Marinade
Assaisonnement ou marinade

(30) Priority: 03.10.2000 EP 00308694; 02.01.2001 EP 01300001
(43) Date of publication of application: 10.04.2002
(73) Proprietor: UNILEVER N.V., 3013 AL Rotterdam (NL); UNILEVER PLC, London EC4P 4BQ (GB)
(72) Inventor: Morley, Wayne Gerald, Crawley, West Sussex RH10 2RQ (GB); Varona, Begona, Crawley, West Sussex RH10 2RQ (GB)
(74) Representative: Wurfbain, Gilles L.

(56) References cited:
- EP-A- 0 979 613
- US-A- 5 104 679
- US-A- 5 232 731
- US-A- 5 508 055

## Description

### Field of the invention

The present invention relates to a product that can be used as a food dressing or marinade, which can be manufactured and offered to the consumer as a two-phase system. Upon shaking by hand, an emulsion can be produced which remains stable for a period of 30 seconds-360 minutes, but which emulsion separates into an oil and water layer after that period. Such a product is suitable for use as a dressing on e.g. salad or a marinade for fish or meat.

### Background of the invention

Conventional dressings for use on salads, especially those in use in Mediterranean countries, are emulsions of an oil phase (e.g. 50-60%) in a water phase (containing vinegar), optionally further containing salt, herbs, and spices. As the size of the oil droplets in these dressings is around 0.2-5 mm it is easily visible by the eye that oil is present. Such dressings are conventionally prepared fresh by the housewife by shaking or stirring oil (40-70%), vinegar (60-30%) and optionally salt, herbs together, to give a translucent, emulsified but not very stable salad dressing. Such dressing will generally be used directly after mixing and before phase separation occurs. Similar formulations are also commercially available but give rise to phase separation and/or the formation of creamy, turbid layers.

As a convenient alternative, there are available ready-to-use salad dressings that are in the form of stable fine emulsions of oil and water, having an opaque, milky appearance, with no oil visibly present (either as droplets or as a separate layer).

Other type emulsions (having more coarse oil droplets) are disclosed in GB 2 143 114. Herein, salad dressings containing 10-50% oil, 0.1-0.4% gum arabicum, 0.3-0.7% iota-carrageenan and water are described. Said composition is processed to form an emulsion using emulsifying apparatus. It is reported the so-prepared emulsion is stable for at least several months. In order for such emulsions to be stable, either high levels of emulsifiers and stabilisers need to be used or the amount of oil which can be emulsified in the water in a stable manner is restricted, e.g. to 50% or less. If low levels of emulsifiers or stabilisers are used or high levels of oil, phase separation is likely to occur. Although such dressings may be convenient in use, they are generally perceived by the customer as artificial, as no oil can readily be seen as a separate layer (the visible presence of oil is seen as a quality attribute in dressings), and/or phase separation will give a creamy, turbid layer between the oil and water layers.

A further type of dressings is mentioned in EP 979613. In this application, dressings are disclosed that can be packed as two separate layers (an oil layer and an aqueous layer), which can be shaken by hand to yield a coarse emulsion, which is stable for at least one week. It is reported that this can be achieved by dressings that have a certain yield stress, which may be achieved by a product having the following composition (wt% on total):

| | |
|---|---|
| Sunflower oil | 50 % |
| Salt | 2 % |
| Vinegar (10%) | 8 % |
| Iota-carrageenan | 0.18% |
| Water | remainder (approx. 39-40%) |

Although such dressings may be desirable as their preparation resembles the artisanal preparation of dressings, but which stays emulsified for some time (more than a week), there is also a demand for compositions which can be packed as two separate phases, which can be shaken by hand to yield a coarse oil-in-water emulsion (all as above), but which separates after a period of few minutes to hours into two separate layers, preferably without the formation of a creamy, turbid layer.

Such a dressing would resemble the artisanal type dressing even more, as each time before use the packed composition has to be shaken or stirred to create a coarse emulsion, which is stable long enough to be applied to food (e.g. salads, meats, fish, vegetables, chips, etcetera), but separates into two distinct layers again.

A solution to this has been proposed in US 5,104,679, wherein a composition contains a water layer with finely dispersed therein a first oil phase, next to a second oil phase which is visible as a separate layer. Upon shaking, the second oil phase forms a coarse emulsion in the water phase. After some time, the emulsion separates more or less cleanly into a water phase (with still the first, dispersed oil phase therein) and a separate oil phase (the second oil phase). This solution is not satisfactory as it is more difficult to make, and has less than optimal properties.

Hence, there is still a desire to manufacture edible compositions which can be used as a food dressing (e.g. for salads, vegetables, chips, but also meats and fish) or marinade (e.g. for application on meats or fish, but also vegetables and others), which compositions can be packed as two separate phases (but in direct contact with eachother, i.e. in the same bottle or other packaging), which composition yields an oil-in-water emulsion upon shaking by hand which is stable for 30 seconds - 360 minutes, but which reverts thereafter back into a system with two visible layers. Preferably, upon phase separation, the occurrence of a creamy, turbid layer in between the oil-and water layers is kept at a minimum, and phase separation is preferably such that the water layer contains less than 10% (v/v) of oil, and the oil layer contains less than 10% (v/v) of water. Also, the oil- and water phases should preferably be translucent after phase separation. If such compositions comprise particulate matter (e.g. herbs, spices, fruit- or vegetable particles, such particulate material should preferably be dispersed in the water phase in a stable manner (i.e. suspended).

### Summary of the invention

It has now been found that the objectives as formulated above may be achieved (at least in part) by a composition comprising (based on the total composition):
- a liquid fat phase in an amount of 20-80 wt%
- a water phase in an amount of 80-20 wt% with dissolved therein a thickener,
- particulates, pastes, powders, extracts, or other physical entity obtainable from the fruit of plants of the genus Capsicum in an amount of at least 0.01% (dry weight % w/total weight),
wherein said thickener comprises 0.01-1% (w/w) of carrageenan. More preferably, the amount of carrageenan is 0.1 -0.8% (w/w).

Preferably, such composition gives upon shaking by hand an oil-in-water emulsion which is stable for a period of up to 30 seconds-360 minutes. Also, it is preferred that the composition according to the invention separates within 360 minutes of standing into a system with a visible water layer containing less than 10% (v/v) of oil, and a visible oil layer containing less than 10% (v/v) of water.

### Detailed description of the invention

In the compositions according to the invention, the carrageenan comprises iota- and/or kappa carrageenan, with iota-carrageenan and mixtures comprising iota-carrageenan being most preferred.

Preferably, the amount of particulates, pastes, powders, extracts or other physical entity obtainable from the fruit of plants of the genus Capsicum is larger than 0.1% (dry weight % w/w). More preferably, said amount is 0.1% - 10% (dry weight % w/w).

In the present invention, the particulates, pastes, powders, extracts, or other physical entity obtainable from the fruit of plants of the genus Capsicum may have in principle any form, such as:
- red pepper particulates in fresh, dried, or frozen form,
- green pepper particulates in fresh, dried or frozen form,
- chilli peppers in fresh, dried, or frozen form,
- red- green- or chilli peppers in paste or powder form,
- oil- or water soluble extracts of red-, green, or chilli peppers,
- paprika oleoresin
- other extract obtained by chemical or physical means.

The extracts may be obtained by water extraction or organic solvent extraction, e.g. using an edible oil, but also mechanical pressing of parts of the fruit of red-, green-, or chilli peppers and collecting the juice may give suitable extracts.

The amount of such particulates, pastes, powders, extracts or other physical entity obtainable from the fruit of plants of the genus Capsicum is larger than 0.01% (dry weight % w/w), and preferably said amount is 0.1% - 10% (dry weight % w/w), more preferably 0.2-5%.

As the composition in the container according to the invention is intended to be used as a salad dressing (which is traditionally acidic) or marinade, it is preferred that the water phase comprises an organic acid in such an amount that the pH of the water phase is between 2.0 and 4.5, preferably between 2.5 and 4.0. Such an organic acid can suitably be chosen from acetic acid (e.g. from vinegar), citric acid, lactic acid or mixtures thereof. The compositions according to the present invention may also have a neutral pH or even be basic, depending upon their desired use, for example a marinade may be just as acidic or less acidic than a salad dressing.

To impart a specific flavour to the salad to which the dressing herein disclosed is applied it may be preferred that the composition in the container further comprises salt, herbs, spices, onions, chopped garlic, garlic oil, or mixtures thereof, in an amount of 0.1-25 wt% based on the total mixture. Other ingredients like chopped vegetables, onions, or olives may also be added.

The amount of oil present in the composition in the container according to the invention may vary between 20-80 wt% based on the total composition, although minimum amounts of 35 wt% and maximum amounts of 65 wt% may be preferred as this are the amounts traditionally used in salad dressings.

In the compositions according to the invention it may be preferred (in order to achieve the desired stability) that the water phase comprising the thickener has a yield stress of at least 0.3 Pa. Preferably, the yield stress is larger than 0.5 Pa, more preferably larger than 0.7 Pa. Although the yield stress may be quite large, it should not be too large, as it will then cause difficulties to mix the oil phase with the water phase by hand force. Hence, the water phase in the composition preferably has a yield stress of less than 5 Pa, more preferably less than 2.5 Pa. The desired yield stress can be achieved by choosing the appropriate level of thickener. The yield stress can be determined from a graph of shear stress vs. shear rate. The above values of yield stress of the water phase relate to measurements when the shear stress as a function of the shear rate is measured using a Carrimed CSL 500 rheometer using a 6 cm 2 deg. cone, at a temperature of 20°C. Shear rate is to be increased from 0 to 50 (1/s) in 300 seconds, and the shear stress can be measured. From a graph of the shear stress (Pa) vs. shear rate (1/s) the yield stress can be found by extrapolating the curve to shear rate=0.

The compositions as disclosed above are preferably packed in containers having a single space, such as ordinary flasks, bottles, jars, cans, etcetera. Suitable sizes for such containers are between 5 (ml) and 3 (l). In order to make the particular properties of the present invention visible, such container is preferably at least partially transparent or translucent. Glass bottles are preferred in this respect.

The compositions according to the invention may be prepared by dissolving the thickener in the water phase (or a part thereof), whereafter all components are introduced in the container. In the absence of agitation or emulsifying action, a two-layer system will form, which can be distributed and sold as such, and which may be turned in a dressing by the end user by shaking the container by hand, thus closely resembling (both in appearance and processing by the consumer) traditional, home-made clear salad dressings. A suitable amount of headspace should be allowed to ensure mixing is possible by shaking the container by hand. Other preparation methods may also be used. The water phase may be heated prior to mixing with other components for pasteurisation/sterilisation purposes, if so desired.

The invention is further exemplified by the following examples, which are to be understood as to be non-limiting.

### EXAMPLES

Note regarding all examples: the amount of the carrageenan gums taken was the weight of the commercial preparation. As such preparations contain impurities, the actual amount of carrageenan is lower.

### Example 1

A product was made according to the following formulation, expressed as % w/w on the total product. Deltagel P552 is a product containing predominantly iota-carrageenan, as marketed by Quest International, Netherlands. The granulated onion was dried granulated onion, size approx. 0.5-1.0 mm.

| Water phase | |
|---|---|
| Ingredient | Amount (%) |
| Salt | 1.8 |
| Deltagel P552 | 0.18 |
| Onion granulated | 0.25 |
| White wine vinegar 10% | 7 |
| Water | 30.77 |

| Oil phase | |
|---|---|
| Ingredient | Amount (%) |
| Sunflower oil | 47 |
| Extra virgin olive oil | 13 |

The water phase was heated to 85°C and then cooled slowly to 40°C. 160g was poured into a bottle and then 240g oil phase was poured carefully on top. The product was shaken vigorously by hand and then left to stand.

The product remained as a stable one-phase system for at least a few days.

### Example 2

A product was made according to the following formulation, using the same method as for Example 1.

| Water phase | |
|---|---|
| Ingredient | Amount (%) |
| Salt | 1.8 |
| Deltagel P552 | 0.18 |
| Onion granulated | 0.25 |
| White wine vinegar 10% | 7 |
| Red pepper flakes | 0.5 |
| Water | 30.27 |

| Oil phase | |
|---|---|
| Ingredient | Amount (%) |
| Sunflower oil | 47 |
| Extra virgin olive oil | 13 |

After shaking, this product separated into 2 phases with a clean interface within 30 minutes.

### Example 3

A product was made according to the following formulation, using the same method as for Example 1. The pepper water was made by heating 1.7% red pepper flakes in water (as present in example 2) to 85°C and then cooling to 40°C, followed by sieving to remove the pepper flakes.

| Water phase | |
|---|---|
| Ingredient | Amount (%) |
| Salt | 1.8 |
| Deltagel P552 | 0.18 |
| Onion granulated | 0.25 |
| White wine vinegar 10% | 7 |
| Pepper water | 30.77 |

| Oil phase | |
|---|---|
| Ingredient | Amount (%) |
| Sunflower oil | 47 |
| Extra virgin olive oil | 13 |

After shaking, this product separated into 2 phases with a clean interface within 30 minutes.

### Example 4

A product was made according to the following formulation, using the same method as for Example 1. The paprika oleoresin was obtained by organic solvent extraction of the fruit of Capsicum annuum, type 80000C.

| Water phase | |
|---|---|
| Ingredient | Amount (%) |
| Salt | 1 . 8 |
| Deltagel P552 | 0.18 |
| Onion granulated | 0.25 |
| White wine vinegar 10% | 7 |
| Water | 30.77 |

| Oil phase | |
|---|---|
| Ingredient | Amount (%) |
| Sunflower oil | 47 |
| Extra virgin olive oil | 12.9 |
| Paprika oleoresin | 0.1 |

After shaking, this product separated into 2 phases with a clean interface within 30 minutes.

### Example 5

Example 2 was repeated, but taking Deltagel P379 (kappa-carrageenan, ex Quest Int.) instead of Deltagel P552 (iota-carrageenan). After shaking the two phases together, the product appeared as a coarse emulsion. When left standing, this product separated into two phases with a clean interface after about 20 minutes.

### Example 6

Example 2 was repeated, but taking Sherex CM177 (mixture of kappa- and iota-carrageenan, ex Quest Int.) instead of Deltagel P552. After shaking the two phases together, the product appeared as a coarse emulsion. When left standing, this product separated into two phases with a clean interface after about 60 minutes.

### Example 7

Example 2 was repeated, but taking Deltagel CE1314 (kappa-carrageenan from processed eucheuma seaweed, ex Quest Int.) instead of Deltagel P552. After shaking the two phases together, the product appeared as a coarse emulsion. When left standing, this product separated into two phases with a clean interface after about 30 minutes.

### Example 8

Example 2 was repeated, but taking Sherex 673 (mixture of kappa- and iota-carrageenan from processed eucheuma seaweed, ex Quest Int.) instead of Deltagel P552. After shaking the two phases together, the product appeared as a coarse emulsion. When left standing, this product separated into two phases with a clean interface after about 30 minutes.

## Claims

1. Composition comprising (based on the total composition):
- a liquid fat phase in an amount of 20-80 wt%
- a water phase in an amount of 80-20 wt% with dissolved therein a thickener,
- particulates, pastes, powders, extracts, or other physical entity obtainable from the fruit of plants of the genus Capsicum in an amount of at least 0.01% (dry weight %/total weight),
wherein said thickener comprises 0.01-1% (dry weight %/total weight) of carrageenan.

2. Composition according to claim 1, wherein the amount of carrageenan is 0.1 -0.8% (w/w).

3. Composition according to claim 1-2, wherein the carrageenan comprises iota- and/or kappa carrageenan.

4. Composition according to claim 3, wherein the carrageenan is iota-carrageenan.

5. Composition according to claim 1-4, wherein the amount of particulates, pastes, powders, extracts or other physical entity obtainable from the fruit of plants of the genus Capsicum is larger than 0.1% (dry weight %/total w).

6. Composition according to claim 5, wherein said amount is 0.1% - 10% (dry weight %/total w).

7. Composition according to claim 1-6, wherein the particulates, pastes, powders, extracts or other physical entity are one or more selected from the group consisting of:
- red pepper particulates in fresh, dried, or frozen form,
- green pepper particulates in fresh, dried or frozen form,
- chilli peppers in fresh, dried, or frozen form,
- red- green- or chilli peppers in paste or powder form,
- oil- or water soluble extracts of red-, green, or chilli peppers,
- paprika oleoresin
- other extract obtained by chemical or physical means.

8. Composition according to claim 1-7, wherein particulates, pastes, powders, or other solid physical entity obtainable from the fruit of plants of the genus Capsicum are suspended.

9. Composition according to any of claims 1-8, wherein the amount of oil is 35-65% by weight, based on total composition.

10. Composition according to any of claims 1-9, wherein the water phase comprises an organic acid in such an amount that the pH of the water phase is between 2.0 and 4.5.

11. Composition according to claim 10, **characterised in that** the organic acid comprises acetic acid, citric acid, lactic acid or mixtures thereof.

12. Composition according to any of claims 1-11, **characterised in that** it further contains salt and or particulate material selected from herbs, spices, onions, chopped garlic, garlic oil, or mixtures thereof, in an amount of 0.1-25 wt% based on the total mixture.

13. Composition according to claim 12, **characterised in that** the particulate material is dispersed in the water phase in a stable manner.

14. Container of a volume of 5 (ml) - 3 (1) comprising the composition according to claims 1-13.

15. Container according to claim 14, wherein the container is a transparent or translucent bottle, flask, or jar.

## Patentansprüche

1. Zusammensetzung, umfassend (auf die gesamte Zusammensetzung bezogen):
• eine flüssige Fett-Phase in einer Menge von 20-80 Gew.-%,
• eine Wasserphase in einer Menge von 80-20 Gew.-% mit darin aufgelöstem Verdickungsmittel,
• Feststoffteilchen, Pasten, Pulver, Extrakte oder andere physikalische Formen, erhältlich aus der Frucht von Pflanzen der Gattung Capsicum, in einer Menge von mindestens 0,01% (Trockengewichts-%/Gesamtgewicht),
wobei das Verdickungsmittel 0,01-1% (Trockengewichts-%/Gesamtgewicht) Carrageenan umfasst.

2. Zusammensetzung nach Anspruch 1, wobei die Menge an Carrageenan 0,1-0,8% (Gew./Gew.) ist.

3. Zusammensetzung nach Anspruch 1-2, wobei das Carrageenan Jota- und/oder Kappa-Carrageenan umfasst.

4. Zusammensetzung nach Anspruch 3, wobei das Carrageenan Jota-Carrageenan ist.

5. Zusammensetzung nach Anspruch 1-4, wobei die Menge der Feststoffteilchen, Pasten, Pulver, Extrakte oder der anderen physikalischen Formen, erhältlich aus der Frucht von Pflanzen der Gattung Capsicum, größer als 0,1% (Trockengewichts-%/Gesamtgewicht) ist.

6. Zusammensetzung nach Anspruch 5, wobei die Menge 0,1% bis 10% (Trockengewichts-%/Gesamtgewicht) ist.

7. Zusammensetzung nach Anspruch 1-6, wobei die Feststoffteilchen, Pasten, Pulver, Extrakte oder die anderen physikalischen Formen, eines oder mehrere ausgewählt aus der Gruppe bestehend aus:
• roten Paprika-Teilchen in frischer, getrockneter oder gefrorener Form,
• grünen Paprika-Teilchen in frischer, getrockneter oder gefrorener Form,
• Chili-Schoten in frischer, getrockneter oder gefrorener Form,
• rotem Paprika, grünem Paprika oder Chili-Schoten in Pasten- oder Pulverform,
• öl- oder wasserlöslichen Extrakten von rotem Paprika, grünem Paprika oder Chili-Schoten,
• Paprika-Oleoresin
• anderen mit chemischen oder physikalischen Mitteln erhaltenen Extrakten
sind.

8. Zusammensetzung nach Anspruch 1-7, wobei die Feststoffteilchen, Pasten, Pulver, Extrakte oder die anderen festen physikalischen Formen, erhältlich aus der Frucht von Pflanzen der Gattung Capsicum, suspendiert sind.

9. Zusammensetzung nach einem der Ansprüche 1-8, wobei die Menge des Öls 35-65 Gew.-%, bezogen auf die gesamte Zusammensetzung, ist.

10. Zusammensetzung nach einem der Ansprüche 1-9, wobei die Wasserphase eine organische Säure in einer solchen Menge aufweist, dass der pH-Wert der Wasserphase zwischen 2,0 und 4,5 ist.

11. Zusammensetzung nach Anspruch 10, **dadurch gekennzeichnet, dass** die organische Säure Essigsäure, Zitronensäure, Milchsäure oder Mischungen davon umfasst.

12. Zusammensetzung nach einem der Ansprüche 1-11, **dadurch gekennzeichnet, dass** sie weiters Salz und/oder teilchenförmiges Material, ausgewählt aus Kräutern, Gewürzen, Zwiebeln, gehacktem Knoblauch, Knoblauchöl oder Mischungen davon in einer Menge von 0,1-25 Gew.%, bezogen auf die gesamte Mischung, enthält.

13. Zusammensetzung nach Anspruch 12, **dadurch gekennzeichnet, dass** das teilchenförmige Material in der Wasserphase stabil dispergiert ist.

14. Behälter mit einem Volumen von 5 (ml) - 3 (1), umfassend die Zusammensetzung nach den Ansprüchen 1-13.

15. Behälter nach Anspruch 14, wobei der Behälter eine durchsichtige oder durchscheinende Flasche, ein Kolben oder ein (Konserven-)Glas ist.

## Revendications

1. Composition comprenant (sur la base de la composition totale) :
- une phase grasse liquide, dans une quantité de 20 à 80 % en poids
- une phase aqueuse, dans une quantité de 80 - 20 % en poids, dans laquelle est dissout un épaississant,
- des particules, des pâtes, des poudres, des extraits ou autres entités physiques pouvant être obtenues à partir du fruit des plantes de la famille Capiscum, dans une quantité d'au moins 0,01 % (% poids sec/poids total),
où ledit épaississant comprend 0,01 - 1 % ((% poids sec/poids total) de carragheenane.

2. Composition selon la revendication 1, dans laquelle la quantité de carragheenane est de 0,1 - 0,8 % (en poids/poids).

3. Composition selon les revendications 1 - 2, dans laquelle le carragheenane comprend du iota- et/ou du kappa-carragheenane.

4. Composition selon la revendication 3, dans laquelle le carragheenane est du iota-carragheenane.

5. Composition selon les revendications 1-4, dans laquelle la quantité de particules, de pâtes, de poudres, d'extraits ou autres entités physiques pouvant être obtenues à partir du fruit des plantes de la famille Capiscum, est supérieure à 0,1 % (% poids sec/poids total).

6. Composition selon la revendication 5, dans laquelle ladite quantité est de 0,1 % - 10 % (% poids sec/poids total).

7. Composition selon les revendications 1 - 6, dans laquelle les particules, pâtes, poudres, extraits ou autres entités physiques sont une ou plusieurs sélectionnées parmi le groupe constitué de :
- particules de poivrons rouges, soit fraîches, soit déshydratées,
soit congelées,
- particules de poivrons verts, soit fraîches, soit déshydratées,
soit congelées,
- piments, soit frais, soit secs, soit congelés
- piments verts ou rouges sous la forme de pâtes ou d'extraits,
- extraits liposolubles ou hydrosolubles de piments verts ou rouges,
- l'oléorésine de paprika,
- autres extraits obtenus par des moyens chimiques ou physiques.

8. Composition selon les revendications 1 - 7, dans laquelle les particules, pâtes, poudres ou autres entités physiques solides pouvant être obtenues à partir des fruits de plantes de la famille Capiscum, sont mises en suspension.

9. Composition selon l'une quelconque des revendications 1 - 8, dans laquelle la quantité d'huile est de 35 - 65 % en poids, sur la base du total de la composition.

10. Composition selon l'une quelconque des revendications 1 - 9, dans laquelle la phase aqueuse comprend un acide organique dans une quantité telle que le pH de la phase aqueuse est entre 2,0 et 4,5.

11. Composition selon la revendication 10, **caractérisée en ce que** l'acide organique comprend de l'acide acétique, de l'acide citrique, de l'acide lactique ou des mélanges de ceux-ci.

12. Composition selon l'une quelconque des revendications 1 - 11, **caractérisée en ce qu'**elle contient en outre du sel et/ou un matériau particulaire sélectionné parmi les herbes, les épices, les oignons, l'ail haché, l'essence d'ail, ou des mélanges de ceux-ci, dans une quantité de 0,1 - 25 % en poids, sur la base du mélange total.

13. Composition selon la revendication 12, **caractérisée en ce que** le matériau particulaire est dispersé dans la phase aqueuse d'une manière stable.

14. Conteneur d'un volume de 5 (ml) - 3 (1) comprenant la composition selon les revendications 1 - 13.

15. Conteneur selon la revendication 14, dans laquelle le conteneur est une bouteille, un flacon ou un pot transparent ou translucide.
